# FASCICULE DE BREVET EUROPEEN

(11) **EP 2 901 462 B1**
(45) Date de publication et mention de la délivrance du brevet: **07.09.2016**
(21) Numéro de dépôt: 13782735.8
(22) Date de dépôt: 24.09.2013
(51) Int. Cl.: H02J 5/00, H01F 27/33

(54) **DISPOSITIF INDUCTIF LIMITANT LES OSCILLATIONS ACOUSTIQUES**
INDUKTIVE VORRICHTUNG ZUR BEGRENZUNG VON SCHALLSCHWINGUNGEN
INDUCTIVE DEVICE LIMITING ACOUSTIC OSCILLATIONS

(30) Priorité: 27.09.2012 FR 1259093
(43) Date de publication de la demande: 05.08.2015
(73) Titulaire: Renault S.A.S., 92100 Boulogne-Billancourt (FR)
(72) Inventeur: GENET, Louis-Marie, F-76300 Sotteville Les Rouen (FR); DESREUMAUX, Laurent, F-78700 Conflans Saint Honorine (FR)
(86) Numéro de dépôt international: PCT/FR2013/052221
(87) Numéro de publication internationale: WO 2014/049253

(56) Documents cités:
- EP-A1- 0 524 087
- EP-A1- 0 547 886
- EP-A1- 2 341 513
- FR-A- 913 294
- US-A- 3 629 758
- US-A- 4 101 704
- US-A1- 2001 022 703

## Description

La présente invention se rapporte de manière générale au domaine de l'électrotechnique, et plus précisément à un dispositif inductif d'électronique de puissance, c'est-à-dire pouvant supporter par exemple un courant d'une centaine d'ampères, et qui trouve son application notamment dans les chargeurs pour véhicules électriques ou hybrides.

Un tel dispositif inductif ou inductance, comporte de manière connue un bobinage à l'intérieur duquel passe un corps ferromagnétique comportant des entrefers qui sont des interstices mécaniques destinés à limiter la saturation du corps ferromagnétique. Celui-ci est par exemple formé de plusieurs blocs ferromagnétiques, par exemple des blocs de ferrite, séparés entre eux par les entrefers. Le bobinage ainsi que le corps ferromagnétique sont plongés dans un pot en aluminium et noyés de résine. Le corps ferromagnétique est mis en contact direct avec le fond du pot afin de faciliter son refroidissement.

Un transformateur de ce genre est connu du document brevet US3629758. La culasse du transformateur est posé sur le fond d'un boîtier qui est posé sur un bloc de support. Ni le fond, ni le bloc de support ont des caractéristiques de conductibilité thermique ou de rigidité de compression définies.

Lorsque le bobinage est parcouru par des variations de courant, dues par exemple à des commutations du courant en amont du dispositif inductif, des variations d'attractions/répulsions correspondantes entre blocs ferromagnétiques génèrent des déformations du corps ferromagnétique se traduisant par des vibrations au niveau des entrefers, remplis d'air ou de résine. Ces vibrations se produisent à une fréquence identique à celle de l'excitation électrique du bobinage, et se transmettent au pot en aluminium formant le boîtier du dispositif inductif. Celui-ci étant généralement fixé solidairement à un carter, par exemple un carter d'électronique de puissance, les vibrations sont également transmises au carter. Etant donné la masse du dispositif inductif, celui-ci rayonne ainsi une puissance acoustique comportant des inconvénients tels que du bruit ou une fragilisation mécanique du dispositif inductif et de l'électronique de puissance sous-jacente, d'autant plus lorsqu'elle se propage au travers du système de s'additionne aux vibrations d'un système de refroidissement du carter. Le carter pouvant être mécaniquement moins structurel que le dispositif inductif, amplifie la pollution acoustique générée.

Afin de réduire les vibrations d'un tel dispositif inductif, il est connu d'utiliser des corps ferromagnétiques de structures différentes des blocs ferromagnétiques séparés par des entrefers. Par exemple on utilise un corps ferromagnétique en tôle empilées et inversées, ou un corps ferromagnétique moulé à entrefer réparti sous forme de bulles d'air dans le corps ferromagnétique.

Néanmoins ces solutions sont coûteuses et incompatibles avec les exigences de conception d'un véhicule hybride ou électrique à bas coût.

Un des buts de l'invention est de remédier à au moins une partie des inconvénients de la technique antérieure en fournissant un dispositif inductif limitant les vibrations transmises à l'extérieur du dispositif lorsqu'il est parcouru par un courant variable, de manière économique et efficace. Notamment l'invention permet de limiter ces vibrations sans avoir à limiter les variations de courant parcourant le dispositif, ce qui reviendrait à ne pas tirer parti de la puissance électrique maximale utilisable avec le dispositif inductif de puissance.

A cette fin, l'invention propose un dispositif inductif comportant un bobinage dans lequel est inséré au moins en partie un corps ferromagnétique comportant des entrefers, ledit bobinage étant maintenu dans un boîtier métallique dudit dispositif, caractérisé en ce qu'un film conducteur thermique est disposé entre ledit corps ferromagnétique et une des bases dudit boîtier métallique, ledit film ayant une raideur inférieure à celle d'une résine synthétique, comme par exemple la résine qui remplit le boitier métallique contenant le bobinage et le corps ferromagnétique.

Préférentiellement le film conducteur thermique est disposé dans une même direction que les entrefers ou la plupart d'entre eux.

Grâce à l'invention, il est possible d'utiliser dans le dispositif inductif selon l'invention, un corps ferromagnétique peu coûteux, la diminution des vibrations s'effectuant grâce au film conducteur thermique. En effet celui-ci permet un découplage mécanique entre le corps ferromagnétique et le boîtier du dispositif, plus important que celle procurée par une résine de maintien du corps ferromagnétique et du bobinage dans le boîtier d'un dispositif inductif. De plus, l'utilisation d'un film conducteur thermique permet de continuer à refroidir le corps ferromagnétique par l'intermédiaire d'un carter lui-même refroidi et sur lequel est fixée la base du boîtier du dispositif inductif selon l'invention. Il permet également de conserver la rigidité structurelle des éléments du dispositif inductif et de l'interface entre celui-ci et le carter. Enfin il permet de ne pas utiliser des corps ferromagnétique plus structurels tels que des corps moulés à entrefer réparti et des corps en tôles assemblées. Ces solutions sont plus coûteuses en matière et en élaboration. Egalement, les solutions en corps ferromagnétique moulé sont en retrait sur les performances magnétique par rapport à un corps ferrite assemblé.

Selon une caractéristique avantageuse de l'invention, ladite base du boîtier métallique est solidairement fixée à un carter métallique d'au moins un module d'électronique de puissance d'un véhicule comportant un moteur de traction électrique.

La fixation du dispositif d'inductance selon l'invention sur un carter d'électronique de puissance d'un véhicule électrique ou hybride utilisée par exemple pour recharger électriquement un tel véhicule, permet d'optimiser l'encombrement du chargeur de ce véhicule et de réduire son coût, le dispositif inductif étant lui-même un composant du chargeur. En effet un tel dispositif inductif est peu onéreux et son emplacement n'est pas contraint au sein même du carter d'électronique de puissance.

Selon une autre caractéristique avantageuse, ladite base dudit boîtier est positionnée sur une zone dudit carter soumise à un système de refroidissement.

Ainsi le système de refroidissement utilisé par exemple pour refroidir un module d'électronique de puissance d'un chargeur de véhicule électrique ou hybride, est réutilisé pour refroidir le dispositif inductif.

Selon une autre caractéristique avantageuse, ledit bobinage et ledit corps ferromagnétique sont structurellement maintenus dans ledit boîtier par une résine synthétique amortissante, dont la raideur de compression isostatique est inférieure à 500MPa. Préférentiellement la raideur de cette résine amortissante donnée par le module de compression isostatique est comprise entre 100MPa et 1000 MPa (MégaPascal).

L'utilisation d'une telle résine synthétique amortissante pour maintenir dans le boîtier le bobinage et le corps ferromagnétique du dispositif inductif, permet d'amortir les vibrations « aériennes » du dispositif inductif, ce qui réduit la puissance acoustique globale rayonnée par le dispositif inductif. En effet au niveau de la base du boîtier la résine n'est pas ou peu présente, l'amortissement des vibrations s'effectuant par le film conducteur thermique, ce qui permet un découplage mécanique entre le boîtier et le carter. Cette résine est donc présente entre d'une part le boîtier et d'autre part le bobinage et le corps ferromagnétique, dans la partie où le boîtier est extérieurement au contact de l'air libre.

Selon une autre caractéristique avantageuse, ledit film conducteur thermique a une raideur de compression isostatique inférieure à 10 MPa.

Ainsi le film conducteur est suffisamment souple pour que le découplage mécanique entre le boîtier du dispositif inductif et le carter diminue les vibrations acoustiques au niveau de la base du boîtier d'au moins une dizaine de décibels environ, pour un dispositif inductif parcouru par des courants compris entre 10 à 250 Ampères (différents modes d'utilisation possible du produit).

Selon une autre caractéristique avantageuse, ledit film conducteur thermique a une conductivité thermique supérieure à 0,5W/mK.

Cette caractéristique permet au dispositif inductif d'être refroidi facilement par le carter, malgré la présence du film.

Selon une autre caractéristique avantageuse, ledit film conducteur thermique a une épaisseur comprise entre 0,1 et 2 mm.

Cette faible épaisseur du film permet de conserver une bonne conductivité thermique au niveau de la base du boîtier, tout en assurant une bonne isolation acoustique du dispositif inductif.

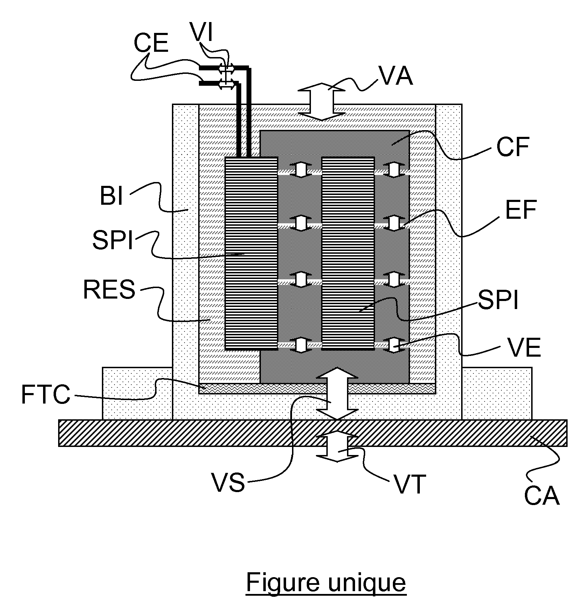

D'autres caractéristiques et avantages apparaîtront à la lecture d'un mode de réalisation préféré décrit en référence à la figure unique représentant un dispositif inductif selon l'invention, dans ce mode de réalisation préféré.

Selon un mode de réalisation préféré de l'invention représenté sur la figure, le dispositif inductif selon l'invention comporte un boîtier BI constitué d'un pot en aluminium. Le boîtier BI est fixé par quatre vis au niveau de sa base inférieure, à un carter CA protégeant des modules d'électronique de puissance d'un chargeur de véhicule électrique, sur une zone du carter CA refroidie par un système de refroidissement du chargeur. En effet le dispositif inductif est utilisé, dans ce mode de réalisation de l'invention, comme inductance d'un chargeur de véhicule électrique.

Dans le boîtier BI est maintenu verticalement dans le sens longitudinal un bobinage SPI relié à des connecteurs électriques CE, par lesquels, lorsque le dispositif inductif est utilisé, entre et sort un courant de forte intensité présentant des variations de courant VI. Un corps ferromagnétique CF est inséré en partie dans le bobinage SPI. Il est composé de blocs ferromagnétiques, par exemple des blocs de ferrite, espacés par des entrefers EF, transversaux au bobinage SPI.

Le corps ferromagnétique est posé sur un film thermiquement conducteur FTC recouvrant la surface intérieure de la base inférieure du boîtier BI. Le bobinage SPI et le corps ferromagnétique CF ont été noyés dans de une résine RES présente sur leur pourtour et sur la partie supérieure du boîtier BI. La résine RES permet de maintenir structurellement le bobinage SPI et le corps ferromagnétique CF dans le boîtier BI, et a été versée par dessus le film thermiquement conducteur FTC.

Le film thermiquement conducteur FTC a une fonction filtrante et amortissante, permettant de diminuer les vibrations émises par le corps ferromagnétique CF lorsque le dispositif d'inductance est soumis à des variations de courant VI. Ces variations de courant VI provoquent en effet des vibrations VE au niveau des entrefers EF, qui se traduisent par des vibrations aériennes VA là où le boîtier est à l'air libre, et des vibrations solidiennes VS au niveau de la base inférieure du boîtier BI fixée au carter CA. Le film thermiquement conducteur FTC permet de diminuer les vibrations solidiennes VS et aérienne VA d'une dizaine de décibels pour des courants parcourant le dispositif inductif de l'ordre de 250 Ampères, et par ce découplage de diminuer les vibrations VT transmises au carter CA. Il est à noter que le découplage entre le corps ferromagnétique CF et le fond du boitier BI permet également de limiter le déplacement du corps ferromagnétique CF du fait de la diminution de contre-réaction entre le corps ferromagnétique CF et le fond du boitier BI. Par ce biais on diminue donc les vibrations du corps ferromagnétique CF transmises par voie aérienne.

Afin d'atteindre un bon niveau de filtrage et d'amortissement, tout en conservant une bonne conductivité thermique permettant de refroidir le dispositif inductif par le carter CA, le film thermiquement conducteur FTC a typiquement les propriétés suivantes :
- son épaisseur a une valeur comprise entre 0,1 mm (millimètres) et 2 mm,
- sa conductivité thermique est supérieure à 0,5W/mK (Watt par mètre et Kelvin),
- et sa raideur donnée par son module de compression isostatique est inférieure à 10MPa (MégaPascal), et au moins inférieure à 50 fois le module de compression isostatique de la résine RES. Il est à noter que le film FTC est monté avec un taux de compression évitant son tassement mécanique, idéalement avec un taux de compression compris entre 90% et 30% de son épaisseur initiale dans les zones comprimées.

Le choix de l'épaisseur du film thermiquement conducteur FTC et de sa matière dépend d'un compromis. En effet :
- plus le film thermiquement conducteur FTC est épais, et mieux on isole le dispositif inductif acoustiquement, mais plus on l'isole également thermiquement et plus le dispositif inductif devient coûteux ;
- moins le film thermiquement conducteur FTC est raide, c'est-à-dire plus il est souple, plus on isole le dispositif inductif acoustiquement, mais moins le film FTC est thermiquement conducteur ;
- plus le film FTC est thermiquement conducteur et plus il est coûteux.

On utilise préférentiellement, pour la mise en oeuvre de l'invention, un film thermiquement conducteur FTC de type par exemple celui commercialisé sous le nom Keratherm® Softtherm® 86/320, de conductivité thermique 2.5W/mK, de 1 mm d'épaisseur et de raideur 3.2MPa.

On utilise également préférentiellement, pour la résine RES, une résine synthétique amortissante, de module de compression isostatique inférieure à 500 MPa, et de conductivité thermique comprise entre 0.05 W/mK et 2W/mK, par exemple la résine commercialisée sous la référence ELAN_TRON® MC125W80LV.

Pour un courant de 210 Ampères parcourant le dispositif inductif, l'utilisation d'une résine RES amortissante en plus du film FTC permet de diminuer de quinze décibels le niveau acoustique des rayonnements du dispositif inductif.

D'autres modes de réalisation de l'invention sont bien sûr possibles. Par exemple dans un autre mode de réalisation de l'invention, le boîtier est maintenu horizontalement par fixation sur un carter situé sous le boîtier ou latéralement au boîtier, selon l'architecture retenue pour le chargeur du véhicule, au prix d'une propagation solidienne plus importante. Il est à noter qu'une alternative possible consiste par exemple en un découplage autour des points de fixation avec des solutions de type « silent bloc », avec ajout d'une feuille d'interface thermique au niveau de la zone d'échange thermique entre le carter et le dispositif d'inductance pour assurer la continuité de la dissipation thermique. Enfin l'invention est bien sûr utilisable pour d'autres applications que dans le domaine automobile, et à des niveaux de courant plus élevés avec un redimensionnement du découplage.

## Revendications

1. Dispositif inductif comportant un bobinage (SPI) dans lequel est inséré au moins en partie un corps ferromagnétique (CF) comportant des entrefers (EF), ledit bobinage (SPI) étant maintenu dans un boîtier (BI) métallique dudit dispositif, **caractérisé en ce qu'**un film conducteur thermique (FTC) est disposé entre ledit corps ferromagnétique (CF) et une des bases dudit boîtier (BI) métallique, ledit film (FTC) ayant une raideur de compression isostatique inférieure à 10 MPa.

2. Dispositif inductif selon la revendication 1, **caractérisé en ce que** ladite base du boîtier (BI) métallique est solidairement fixée à un carter (CA) métallique d'au moins un module d'électronique de puissance d'un véhicule comportant un moteur de traction électrique.

3. Dispositif inductif selon la revendication 1 ou 2, **caractérisé en ce que** ladite base dudit boîtier (BI) est positionnée sur une zone dudit carter (CA) soumise à un système de refroidissement.

4. Dispositif inductif selon l'une quelconque des revendications 1 à 3, **caractérisé en ce que** ledit bobinage (SPI) et ledit corps ferromagnétique (CF) sont structurellement maintenus dans ledit boîtier (BI) par une résine synthétique amortissante, dont la raideur de compression isostatique est inférieure à 500 MPa.

5. Dispositif inductif selon l'une quelconque des revendications 1 à 4, **caractérisé en ce que** ledit film conducteur thermique (FTC) a une conductivité thermique supérieure à 0,5W/mK.

6. Dispositif inductif selon l'une quelconque des revendications 1 à 5, **caractérisé en ce que** ledit film conducteur thermique (FTC) a une épaisseur comprise entre 0,1 et 2 mm.

## Patentansprüche

1. Induktive Vorrichtung, umfassend eine Wicklung (SPI), in die mindestens teilweise ein ferromagnetischer Körper (CF) eingesetzt ist, der Spalte (EF) aufweist, wobei die Wicklung (SPI) in einem Metallgehäuse (BI) der Vorrichtung gehalten wird, **dadurch gekennzeichnet, dass** ein wärmeleitender Film (FTC) zwischen dem ferromagnetischen Körper (CF) und einer der Basen des Metallgehäuses (BI) angeordnet ist, wobei der Film (FTC) einen Widerstand gegen ein isostatisches Pressen von weniger als 10 MPa aufweist.

2. Induktive Vorrichtung nach Anspruch 1, **dadurch gekennzeichnet, dass** die Basis des Metallgehäuses (BI) mit einem Metallkasten (CA) mit mindestens einem elektronischen Leistungsmodul eines Fahrzeugs fest verbunden ist, das einen Fahrzeugantriebsmotor umfasst.

3. Induktive Vorrichtung nach Anspruch 1 oder 2, **dadurch gekennzeichnet, dass** die Basis des Gehäuses (BI) in einem Bereich des Kastens (CA) positioniert ist, der einem Kühlsystem ausgesetzt ist.

4. Induktive Vorrichtung nach einem der Ansprüche 1 bis 3, **dadurch gekennzeichnet, dass** die Wicklung (SPI) und der ferromagnetische Körper (CF) strukturell in dem Gehäuse (BI) durch ein synthetisches Dämpfungsharz gehalten werden, dessen Widerstand gegen ein isostatisches Pressen kleiner ist als 500 MPa.

5. Induktive Vorrichtung nach einem der Ansprüche 1 bis 4, **dadurch gekennzeichnet, dass** der wärmeleitende Film (FTC) eine Wärmeleitfähigkeit von mehr als 0,5 W/mK aufweist.

6. Induktive Vorrichtung nach einem der Ansprüche 1 bis 5, **dadurch gekennzeichnet, dass** der wärmeleitende Film (FTC) eine Dicke zwischen 0,1 und 2 mm aufweist.

## Claims

1. Inductive device including a winding (SPI) in which a ferromagnetic body (CF) having gaps (EF) is at least partially inserted, said winding (SPI) being held in a metal housing (BI) of said device, **characterized in that** a thermally conductive film (FTC) is placed between said ferromagnetic body (CF) and one of the bases of said metal housing (BI), said film (FTC) having an isostatic compression stiffness of less than 10 MPa.

2. Inductive device according to Claim 1, **characterized in that** said base of the metal housing (BI) is fixed integrally to a metal casing (CA) of at least one power electronics module of a vehicle having an electric propulsion motor.

3. Inductive device according to Claim 1 or 2, **characterized in that** said base of said housing (BI) is positioned on an area of said casing (CA) subject to the action of a cooling system.

4. Inductive device according to any one of Claims 1 to 3, **characterized in that** said winding (SPI) and said ferromagnetic body (CF) are structurally held in said housing (BI) by a damping synthetic resin, whose isostatic compression stiffness is below 500 MPa.

5. Inductive device according to any one of Claims 1 to 4, **characterized in that** said thermally conductive film (FTC) has a thermal conductivity of more than 0.5 W/mK.

6. Inductive device according to any one of Claims 1 to 5, **characterized in that** said thermally conductive film (FTC) has a thickness in the range from 0.1 to 2 mm.
